# EUROPEAN PATENT SPECIFICATION

(11) **EP 3 652 473 B1**
(45) Date of publication and mention of the grant of the patent: **30.08.2023**
(21) Application number: 18745667.8
(22) Date of filing: 10.07.2018
(51) Int. Cl.: F16K 27/12, F16K 3/26, F16K 7/17, F16K 37/00, F16K 31/50

(54) **AUTOMATIC SHUT OFF VALVE**
AUTOMATISCHES ABSPERRVENTIL
SOUPAPE D'ARRÊT AUTOMATIQUE

(30) Priority: 13.07.2017 GB 201711307
(43) Date of publication of application: 20.05.2020
(73) Proprietor: Surestop Ltd., Birmingham, West Midlands B24 9PS (GB)
(72) Inventor: LOVE, Carl, Birmingham West Midlands B24 9PS (GB)
(74) Representative: Marks & Clerk LLP
(86) International application number: PCT/GB2018/051958
(87) International publication number: WO 2019/012269

(56) References cited:
- EP-A1- 0 257 906
- EP-A1- 3 045 788
- EP-A2- 1 195 547
- EP-A2- 1 227 193
- CN-A- 103 912 688
- CN-Y- 2 876 468
- DE-U1-202006 018 756
- GB-A- 680 020
- JP-A- 2012 241 771
- US-A- 2 683 580
- US-A- 5 409 037
- US-A1- 2003 164 194
- US-A1- 2010 045 471
- US-A1- 2010 065 126
- US-A1- 2010 132 803
- US-A1- 2011 073 189
- US-B1- 6 375 086
- US-B1- 6 460 567
- US-B1- 7 665 483

## Description

### Technical Field of the Invention

The present invention relates to a system for remotely controlling the supply of a fluid. In particular, the invention relates to a control unit for controlling a valve to shut off a supply of fluid, such as water or air, and a method of remotely operating the control unit.

### Background

A mains water supply usually enters a domestic dwelling or property through a single pipeline. A tap (known as a "stop-cock") is typically provided so that the water supply to the dwelling can be shut off if required, for example if there is a water leak within the property. The stop-cock is usually located out of sight, and is not always easily accessible, particularly for the elderly or infirm. In addition, the stop-cock may not need to be operated for many years, and might have become seized during that time, so that it is not possible for the occupier to operate the stop-cock when it is ultimately required.

The present inventors' previous European patent applications EP2396579 and EP1195547 describe an improved shut-off valve system which addresses the aforementioned problems, by providing a diaphragm valve that is operated using differential pressure. The diaphragm valve is controlled by a hydraulic pilot valve, which in turn is controlled by a toggle or rocker switch that is easy for the user to operate. EP1195547 describes an upgraded system in which the pilot valve and switch may be connected to the diaphragm valve by a length of tubing, enabling the switch to be located in a convenient place up to several metres away from the pipework. However, as with existing stop-cocks, the valve must still be operated manually in order to shut off the water supply.

If a person is not physically present at the property to turn off the stop-cock at the time when a leak occurs, the leak may continue for many hours, causing extensive damage to the property and considerable water wastage. This can be a particular problem at managed facilities, such as university accommodation, which are typically vacant for several months of the year and so water leaks may potentially go undiscovered for long periods of time. Letting agents and landlords may also manage a large number of properties which may be unoccupied for days or weeks, or in which the current occupiers are unaware of the location of the stop-cock, resulting in leaks continuing for a prolonged period of time.

Significant water damage may also be caused by fire prevention systems, such as sprinklers, since there may be a delay between a fire being extinguished and the firefighters locating and turning off the stop-cock. Deliberate water damage caused by prison inmates can also be a problem at correctional facilities. Such a facility may have many individual stop-cocks for shutting off the water supply to individual cells or cell blocks, all of which must be manually operated.

Hence, there are many situations in which it would be desirable to control a shut-off valve remotely or automatically without needing to manually operate the stop-cock, in order to prevent unnecessary water damage.

The present invention seeks to solve the aforementioned problem and to provide a shut-off valve which can be controlled remotely or automatically without requiring manual operation, or ameliorate or overcome a problem associated with the prior art, or provide a useful alternative.

The inventors of the present invention initially attempted to solve this problem by modifying their improved diaphragm valve of EP2396579 to be battery operated, utilising a 3V DC motor in conjunction with a cam assembly to transpose radial motion to linear motion. However, this resulted in a large, bulky valve which was labour intensive to assemble, with each valve requiring individual adjustment in order for the power supply and cam to work properly. This adjustment could also present function issues due to operational material wear, preventing the valve from working correctly.

The inventors therefore decided to modify the remote switch of EP1195547 to be battery operated, rather than the valve itself. This allowed the function of the valve to remain unaffected, while also permitting existing remote-operated valves to be conveniently upgraded with a new switch. It was desirable for the new switch to have the following characteristics: able to be retro-fitted to existing valves; battery-operated; simple to manufacture and assemble; comprising minimal moving parts; and enabling future products to be compatible.

In an early prototype, the inventors attempted to solve the above problems by modifying the piston of the switch pilot valve to incorporate a rack. A motor was mounted perpendicular to the piston and fitted with a pinion gear. The motor would drive the piston, via the rack and pinion interface, in a single direction. The drive could be controlled either by a timed duration or by the over-torque of the motor which would be experienced when the piston hit its stops. Although the switch worked and was simple to manufacture, this motorised design suffered from a number of problems. The torque of the motor that was needed to drive the piston caused excessive wear on the drive pinion, drastically reducing the lifetime of the product. The manifold containing the piston could also potentially be unseated, and the piston itself could be caused to deflect and bend. The assembly was also not as compact as desired. The design was therefore not suitable.

The inventors therefore designed a new switch, utilising a battery-operated micro latching solenoid rather than a motor. This design was not difficult to assemble and manufacture, and was small and compact enough to be positioned into a control module back box. However, the cost of the solenoid was high and, although the solenoid was able to shut off water at normal operational pressure, when the valve was shut, the back pressure was too high to enable the solenoid to release again and unblock the flow of water. The design was therefore not suitable.

### Summary of Invention

The invention provides a system according to claim 1 and a method according to claim 14. In the following, only embodiments including all the features of one of claims 1 or 14 pertain to the invention.

According to an example of the invention, there is provided a control manifold (also referred to as a control unit) for a remote shut-off valve, the control unit comprising: an electric motor having a motor shaft, the motor shaft comprising a threaded rod; a valve comprising a valve member, the valve member having a threaded recess for receiving the threaded rod; and an inlet and outlet for fluid, the valve having an open position in which fluid can flow from the inlet to the outlet and a closed position in which the flow of fluid from the inlet to the outlet is blocked, wherein the valve member is movable between the open and closed positions by a threading and unthreading interaction of the valve member with the threaded rod when the motor is operated.

The valve is intended for use with any suitable fluid, including liquids and gases. According to the invention, the valve is a hydraulic valve and the fluid is water. Not according to the invention, the valve is a pneumatic valve and the fluid is air. It will be understood that, when the valve is a hydraulic valve, the control unit should be water-tight (in use) in order to prevent undesired leaking of the liquid and ensure that sufficient hydraulic pressure can be generated to operate a connected diaphragm valve.

In use, the motor is controlled electronically via voltage supplied by an external switch, which enables the valve to be operated without a manual toggle switch. Electronic control offers the possibility for the motor to be operated in response to signals sent, for example, from a wireless local network, so that the valve can be actuated either remotely by a user or automatically based on, for example, signals sent from appropriate sensors. In an embodiment, voltage is supplied to the motor in a timed pulse, so that the motor is actuated for a set time value. In an alternative embodiment, voltage is supplied to the motor until a peak in voltage (caused by a peak in torque output) is detected, so that the motor stops when the valve member hits the maximum limit of either the open or closed position. This prevents damage to the valve caused by the motor continuing to operate after the valve member has already hit its stops.

The threading mechanism converts rotational motion of the motor into linear motion of the piston and allows the motor to be positioned in-line with the piston. This gives the control unit an advantageously slim and compact design, which enables the control unit to easily fit into both new and existing control module housings. In an embodiment, the motor is a 3V DC motor. In an embodiment, the motor comprises a gearbox, which decreases the output speed and increases the output torque of the motor. This enables the torque from the motor for driving the piston to be increased from the torque output from the motor itself. In an embodiment, the motor shaft is coupled to a distinct threaded rod which rotates with the motor shaft when the motor is in operation. In an alternative embodiment, the motor shaft is itself threaded, so that the threaded rod is integrally formed with and constitutes part of the motor shaft.

The valve member moves within a valve chamber along an axis of operation, between the open and closed positions. In an embodiment, the valve member is an elongate piston extending from a first end to a second end in the direction of the axis of operation, with the threaded recess being located in the second end of the piston. In an embodiment, the valve member is generally cylindrical. In a further embodiment, the valve member comprises (one or more) flat surface(s), (at least one of) which abuts against a corresponding flat surface in the valve chamber and prevents rotation of the valve member when the motor is operated. This allows the valve member to move linearly by being driven by the rotation of the thread.

In an example, the valve member comprises a region of reduced thickness, which provides a flow path between the inlet and outlet when the valve member is in the open position. This enables fluid to flow through the space between the valve member and the valve chamber around the region of reduced thickness. In an alternative embodiment, the valve member comprises a bore extending perpendicular to the axis of operation, which provides a flow path between the inlet and outlet when the valve member is in the open position. In embodiments where the valve member comprises a bore, the mechanical strength of the valve member may be reduced, so the valve member may need to be made larger in order to ensure that it is sufficiently durable. In an embodiment, the valve member is elongate in its intended direction of movement.

In an example, the valve member further comprises one or more O-rings, to prevent undesirable leakage of fluid into the valve chamber around the valve member. In embodiments where the valve member comprises a region of reduced thickness, an O-ring may be disposed on each side (in a movement direction) of the region of reduced thickness, to provide a seal around this region and ensure that the flow of fluid is prevented when the valve member is in the closed position, and also to prevent fluid leakage when the valve member is in the open position.

According to the invention, the control unit further comprises a body, with the motor and the valve being housed within the body. In an embodiment, the body is formed from a WRAS-approved material, such as stainless steel, copper, brass or plastic. In an embodiment, the body is formed from a material which is capable of being cast. In an alternative embodiment, the body is formed from a material which is capable of being injection moulded. In an embodiment, the control unit further comprises an end cap. In an embodiment, the end cap is screwed into the body. This prevents the motor escaping from the body due to the force generated when moving the valve member. In an embodiment, the narrow sides of the body comprise a plurality of longitudinal grooves or recesses. This enables the body to be injection moulded more easily without visible defects, as well as reducing the amount of material required to manufacture the body. In an embodiment, the wide sides of the body comprise lateral grooves or recesses. This reduces the chance of distortion when forming the internal channels, improving the accuracy of their manufacture, as well as reducing the amount of material in the body. The lateral grooves may also be used for locating the control unit within a housing, by providing one or more recesses which can receive a securing element, such as a latch or an edge of a cut-out in the housing.

In an example, the inlet and outlet are located at a first end of the body. In an embodiment, the inlet and outlet are each connected to the valve chamber via a respective flow channel. In an embodiment, each flow channel comprises two sections. In an embodiment, a first section of the flow channel extends from the inlet or outlet into the body, parallel to the axis of operation. In a further embodiment, a second section of the flow channel extends from the side of the body to the valve chamber, perpendicular to the axis of operation. In an embodiment, the second section of the flow channel is sealed by a plug, which is inserted into the opening in the side of the body and optionally welded into place. The plug may be chemically welded, e.g. with glue, or sonically welded. In an embodiment, the plugged opening provides a recess in the side of the body.

In an example, the wall of each flow channel comprises a lining which extends into the flow channel from the inlet or outlet. In an embodiment, the lining is formed from metal. In an embodiment, the flow channels each comprise fixing means for securely fastening tubing that may be connected to the control unit via the inlet and outlet. In an embodiment, the fixing means comprises a push fit connector, which is configured to engage with a corresponding connector on the end of the tubing, or with the tubing itself. In a further embodiment, the push fit connector comprises a substantially tubular insert, which may be formed from plastic, metal or a combination thereof. In an alternative embodiment, the fixing means comprises a female threaded portion, which allows the tubing to be screwed in via a corresponding male threaded portion on the end of the tubing. In an embodiment, the female threaded portion is provided in the wall of the flow channel. In an alternative embodiment, the female threaded portion is provided in the lining of the flow channel.

According to the invention, there is provided a control module for controlling a remote shut-off valve, the control module comprising a housing which contains a control unit according to the invention. In an embodiment the housing is in the form of a shallow box which, in use, is installed onto a wall or other suitable surface. In an embodiment, the housing comprises four sidewalls and a back-plate. When installed onto a wall, the back-plate is attached directly to the wall and the front face remains open. In an alternative embodiment, the front face may be fully or partially closed. In a further embodiment, one of the sidewalls comprises a cut-out corresponding to the cross-sectional shape of the control unit. The control unit can be easily inserted into the housing through the cut-out, which also allows tubing to extend from the control unit and out of the control module when the control unit is fitted. In an embodiment, the housing comprises a bracket for holding the control unit in place. In an embodiment, the housing further comprises a locating clip for securely fixing the control unit in place. In an embodiment, the locating clip engages with a recess in the side of the body of the control unit and may be released by manually moving the clip out of the recess. In an embodiment, the recess in the body is provided by the plugged opening of the second section of the flow channel.

The control module further comprises a control panel which fits onto the housing. In an embodiment, the control panel has a cross-sectional shape which is substantially the same size and shape as the cross-sectional shape of the housing. In an embodiment, the control panel covers an open face of the control module housing. In an embodiment, the control panel is attached to the control module by fixing means. In an embodiment, the fixing means comprises screws, adhesive, push-fit connectors or any combination thereof. The person skilled in the art would understand that any suitable fixing means may be used to attach the control to the control module housing. In an embodiment, the control module is provided as an integral unit with the housing and the control panel. In an alternative embodiment, the control panel is provided separately from the housing and the control module is assembled during installation.

In an example, the control module further comprises a power supply for powering the motor of the control unit. In an embodiment, the power supply is a battery. A battery-powered control unit may be conveniently installed by a plumber when fitting the valve, without needing any specialist electrical training to wire in a mains electricity supply. In an embodiment, the power supply is located within the control panel. In an alternative embodiment, the power supply is located within the housing. In a further embodiment, the power supply is located within the control panel and an additional power supply is located within the housing. In embodiments where the power supply is located within the housing, the housing may comprise a battery compartment. In an embodiment, the control module further comprises a battery sensor configured to measure battery status information. In an embodiment, the battery status information includes information such as the charge level or the condition of the battery.

According to the invention, the control panel comprises a manual control switch, configured to control the motor in the control unit. In an embodiment, the manual control switch is located on the front face of the control panel when the control module is installed onto a wall. A manual control switch enables the valve to be operated locally, which might be necessary, for example, to over-ride signals received via a wireless network, or in the event of a network failure which prevents the valve from being operated remotely. In an embodiment, the manual control switch is in the form of a button. In an embodiment, two or more manual control switches are provided on the control panel, with a first manual control switch being configured to set the valve member to the open position and a second manual control switch being configured to set the valve member to the closed position. In an embodiment, the control panel comprises display means corresponding to each manual control switch, for indicating confirmation that the manual control switch has been activated. In an embodiment, the display means comprises an LED. When the manual control switch is pressed, the LED lights up momentarily.

In examples where the control module comprises a battery sensor, the control panel may further comprise a battery test switch configured to control a battery status test. In an embodiment, the battery status test comprises transmitting battery status information from the battery sensor to a processor, comparing the information to a desired value to give a positive or negative result, and indicating the result to the user. As an example, the battery status information may include the charge level of the battery and a negative result may be indicated if the charge level is below a target percentage, e.g. 10%. The result may be indicated in any appropriate manner. In an embodiment, the result is indicated by an audible signal or alarm. In another embodiment, the result is indicated on display means. In a further embodiment, the display means comprises an LED. In an embodiment, the LED lights up (optionally in a particular colour or pattern) to indicate the result. This informs the user when the battery needs to be replaced. The person skilled in the art would understand that the display means is not limited to an LED that lights up to indicate a result and may comprise any suitable display means for indicating such a result. In embodiments where a low battery level is indicated by an audible alarm, the alarm may be activated without requiring the battery test switch to be pressed.

According to the invention, the control module further comprises: a receiver and a transmitter, configured to receive signals from and send signals to a network connected to the Internet; and a transducer or relay, configured to control the motor in response to a signal received by the receiver, such that the valve member is set to the closed position when an "off" signal is received and to the open position when an "on" signal is received. In an embodiment, the receiver, transmitter and transducer are located within the control panel. In an embodiment, the control module communicates with the network via a wireless communications link. In an embodiment, the network is a local area network and the wireless communications link is Wi-Fi or Bluetooth. This allows a user to remotely control the control unit (and thus operate the valve) from any location, over the Internet. In an alternative embodiment, the network is a cellular data network and the wireless communications link is a suitable telecommunications link, such as 3G, 4G or 5G, for example, although it will be appreciated that other mobile telephony standards may be used, as are available, as appropriate. This allows a user to remotely control the control unit without requiring local internet connectivity in the property in which the control unit is located. This is particularly advantageous, for example, to allow a property manager to control the water supply in a property even if is unoccupied or if the tenant is not subscribed to a broadband internet service. The person skilled in the art would understand that the local area network wireless communications link is not limited to Wi-Fi or Bluetooth, and the telecommunications link is not limited to 3G, 4G or 5G. The wireless communications link may comprise any suitable means for wirelessly connecting the control module to a network.

In use, the Internet-connected control module enables the attached stop-cock to form part of the "Internet of things" (IoT). IoT devices communicate with each other and with servers via a number of different protocols. In an embodiment, the control module communicates with other devices or the wider Internet via a suitable IoT protocol, such as the Constrained Application Protocol (CoAP), Message Queue Telemetry Transport (MQTT) protocol or Data Distribution Service (DDS) protocol. The person skilled in the art would understand that any suitable IoT protocol may be used for this purpose. In an embodiment, the network comprises an IoT hub and the control module is configured to communicate with the loT hub. In an embodiment, the loT hub is plugged into a router and the router is connected to the Internet. In an embodiment, the loT hub is configured to communicate with a number of sensors and/or IoT devices, including the control module.

In examples where the control module comprises a battery sensor, the transmitter may be configured to send battery status information to the network. This allows a user to remotely check whether the battery needs replacing. In an embodiment, the control module comprises a valve status sensor for detecting valve status information, i.e. whether the valve is in the open position or the closed position. In an embodiment, the valve status sensor comprises a switch within the valve which is triggered when the valve is in either the open position or the closed position. In an embodiment, the transmitter is configured to send valve status information to the network, which allows a user to remotely check whether the valve is open or closed.

According to the invention, there is provided a remote shut-off valve system comprising a control module and a diaphragm valve comprising. The control module comprising comprising a housing, a control unit (100) contained within the housing (210) and a control panel (230) attached to the housing. The control unit (100) comprising: an electric motor (102) having a motor shaft, the motor shaft comprising a threaded rod (108); a valve (110) comprising a valve member (112), the valve member (112) having a threaded recess (114) for receiving the threaded rod (108); and an inlet (120) and outlet (130) for fluid, the valve (110) having an open position in which fluid can flow from the inlet (120) to the outlet (130) and a closed position in which the flow of fluid from the inlet (120) to the outlet (130) is blocked, wherein the valve member (112) is movable between the open and closed positions by a threading and unthreading interaction of the valve member (112) with the threaded rod (108) when the motor (102) is operated, wherein the valve (310, 400) is a hydraulic valve and the fluid is a liquid,
wherein the control unit (100) further comprises a body (140), the motor (102) and the valve (110) being housed within the body, and wherein: i) the control panel (230) comprises a manual control switch (232, 234) configured to control the motor (102) in the control unit (100); and/or ii) the control module (250) comprises: a receiver, configured to receive signals from a network connected to the Internet; a transmitter, configured to send signals to the network; and a transducer, configured to control the motor (102) in response to a signal received by the receiver, such that the valve member (112) is set to the closed position when an "off" signal is received and to the open position when an "on" signal is received. The diaphragm valve comprising an inlet; an outlet; a diaphragm valve member; and a diaphragm valve seat. The system further comprises a first fluid conduit connecting the inlet of the diaphragm valve to the inlet of the control unit within the control module, and a second fluid conduit connecting the outlet of the control unit to the outlet of the diaphragm valve. The diaphragm valve member has a closed position in which it engages the diaphragm valve seat and blocks the flow of fluid from the inlet of the diaphragm valve to the outlet of the diaphragm valve and an open position in which the diaphragm valve member does not engage the valve seat and fluid can flow from the inlet of the diaphragm valve to the outlet of the diaphragm valve, wherein when the valve (110) of the control unit (100) is in a the closed position a pressure at the inlet (312) becomes higher than a pressure at the outlet (314) causing the diaphragm valve member (408) to move to a closed position and engage the diaphragm valve seat (404).

In use, the diaphragm valve is fitted to a pipe through which fluid is supplied. When the valve member of the control unit is open, fluid flows freely through the control unit from the inlet (which is fed from the inlet of the diaphragm valve) to the outlet (which feeds into the outlet of the diaphragm valve), and the pressure is substantially the same at the inlet and the outlet, so the diaphragm valve member remains in the open position. When the valve member of the control unit is closed, fluid is prevented from flowing from the inlet to the outlet. This causes the pressure at the inlet to become significantly higher than the pressure at the outlet, which in turn causes the diaphragm valve member to engage the diaphragm seat and close the diaphragm valve, thereby shutting off the supply of fluid through the pipe.

In an embodiment, the system further comprises an IoT hub, which is connected to the network. The control module is configured to communicate with the loT hub. In an embodiment, the loT hub is plugged into a router, and the router is connected to the Internet. In an embodiment, the loT hub is configured to communicate with a plurality of control modules. In an embodiment, the loT hub is configured to communicate with all of the plurality of control modules simultaneously. In an alternative embodiment, the loT hub is configured to communicate with each of the plurality of control modules separately. This enables multiple valves within a property to be controlled via a single loT hub connected to the network.

In an embodiment, the system further comprises one or more sensors, and the loT hub is configured to receive signals from the sensors. In an embodiment, the one or more sensors are selected from the group comprising smoke detectors, fire detectors, motion sensors, door sensors, flow sensors and cameras. In an embodiment, the loT hub is further configured to transmit command signals to the control module corresponding to the signals received from the sensors. For example, in an embodiment, the loT hub may transmit an "on" command signal to the control module when a signal is received from a fire detector indicating the presence of a fire, or when a signal is received from a motion sensor or camera indicating the presence of a person, thereby causing the valve member to move to the open position and open the diaphragm valve, thus unblocking the water supply. The person skilled in the art would understand that the one or more sensors may comprise any sensor suitable for connecting to an IoT network, and that the loT hub may be configured to send command signals to the control module corresponding to any appropriate signal received from the sensors.

According to the invention, there is provided a method of remotely controlling a supply of fluid. The method comprises: receiving a signal at a control module of a remote shut-off valve system according to the invention; and actuating the motor in response to the signal, such that the valve member is set to the closed position when an "off" signal is received and to the open position when an "on" signal is received. This enables a diaphragm valve, to which the control module is connected, to be shut off in response to signals received from a remote location, for example from a user via the Internet. The method further comprises: providing one or more input options on a user interface; receiving user input corresponding to one or more responses to the input options, wherein the user input is received at the user interface; and transmitting a signal from a network to the control module, the signal corresponding to the user input. In an embodiment, the user interface is web-based. This enables the user to conveniently shut off or open their water supply over the Internet from a computer or mobile device. In a further embodiment, the user is able to operate a plurality of control modules over the user interface. In an embodiment, the plurality of control modules can be controlled individually. In an alternative embodiment, the plurality of control modules can be controlled simultaneously.

In embodiments where the control module comprises a battery sensor for measuring battery status information, the method further comprises: transmitting a signal from the control module to the network, the signal corresponding to the battery status information; transmitting the battery status information to the user interface; and graphically representing the battery status information on the user interface. This enables the user to initiate a battery status check from their computer or mobile device and receive the results of the test on the user interface, so that they can remotely check whether the battery needs replacing.

In examples where the valve comprises a valve status sensor for detecting valve status information, the method further comprises: transmitting a signal from the control module to the network, the signal corresponding to the valve status information; transmitting the valve status information to the user interface; and graphically representing the valve status information on the user interface. This enables the user to remotely check whether the valve is currently open or closed.

In an example, the method further comprises detecting the presence of a person using a motion detector or camera and transmitting an "on" signal from the detector or camera to the control module, such that the valve member is set to the open position. This allows the water supply to be automatically turned on when somebody enters a previously vacant property. In an embodiment, the method further comprises detecting the absence of a person and transmitting an "off" signal from the detector or camera to the control module, such that the valve member is set to the closed position. In an embodiment, the absence of a person is determined by the duration of time since a motion detector or camera was last activated. The skilled person would understand that any suitable method for detecting the absence of a person may be used. This allows the water supply to be automatically shut off when the property is unoccupied, preventing the possibility of any leaks occurring when the property is unattended.

In an example, the method further comprises: detecting the presence of a fire using a smoke and/or fire detector; transmitting an "on" signal from the detector to the control module, such that the valve member is set to the open position while the fire is present; detecting the absence of fire using the detector; and transmitting an "off" signal from the detector to the control module, such that the valve member is set to the closed position when the fire is extinguished. This allows the water supply to be automatically opened in the event of a fire, to allow the fire prevention system to function, and to be automatically shut off when the fire has been extinguished, to prevent further water damage.

In an example, the sensor or detector communicates with the control module via an appropriate IoT protocol. The skilled person will understand that the method may further comprise receiving suitable signals from any type of appropriate sensor, and operating the valve accordingly.

### Brief Description of the Drawings

Embodiments of the invention will now be described with reference to the accompanying figures, in which:
Figure 1a shows a perspective view of a control unit according to the invention.
Figure 1b shows an end view of the control unit.
Figure 2a shows a cross-section view of the control unit, with the valve in the open position.
Figure 2b shows a cross-section view of the control unit, with the valve in the closed position.
Figure 3a shows a perspective view of a control module according to the invention, containing a control unit.
Figure 3b shows a perspective view of the control module without a control unit.
Figure 3c shows a plan view of the control module, containing a control unit.
Figure 4 shows an alternative embodiment of the control unit illustrated in Figure 1a, further comprising lateral grooves in the body of the unit.
Figure 5a shows a plan view of a control module according to the invention.
Figure 5b shows a perspective view of the control module of Figure 4a.
Figure 6 shows a diagram of a remote shut-off valve system according to the invention.
Figure 7a shows an exploded view of a diaphragm valve according to the invention.
Figure 7b shows a cross-section view of the cap member of the diaphragm valve.
Figure 8 is a flow diagram of a process for remotely shutting off a water supply according to an embodiment of the invention.

### Detailed Description of the Drawings

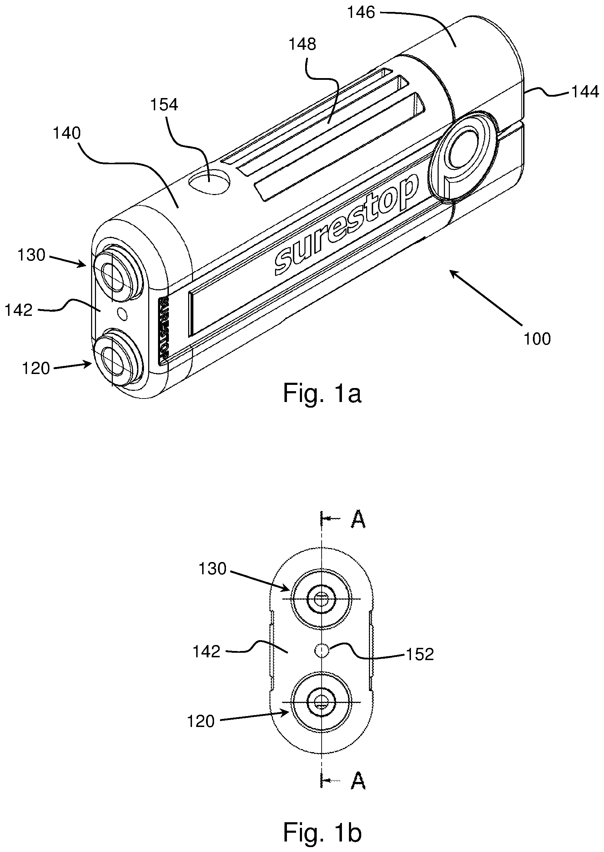

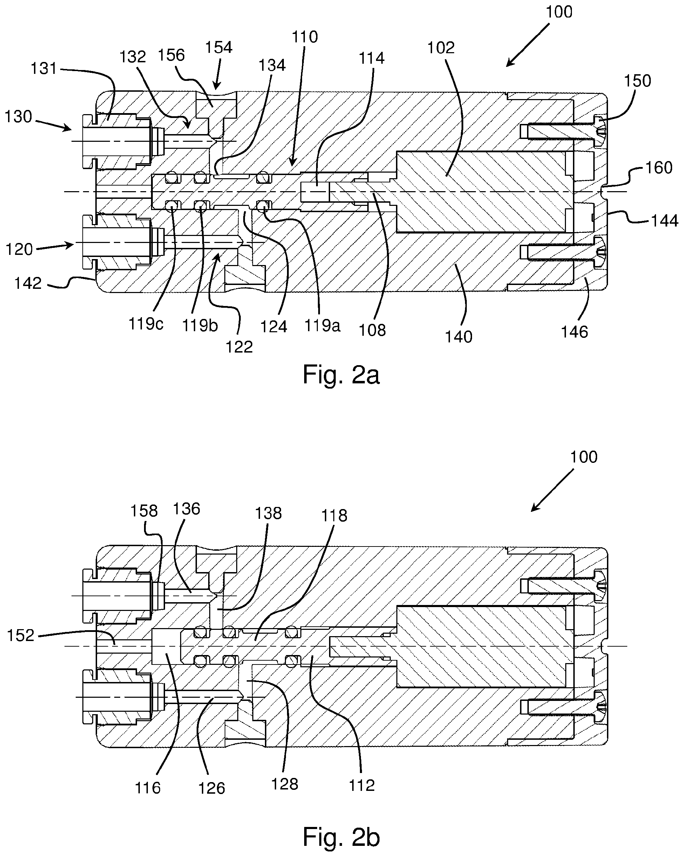

Figures 1a and 1b show a control unit 100 in accordance according to the invention. The control unit 100 comprises an elongate body 140 having a first end 142 and a second end 144. The first end 142 comprises an inlet 120, an outlet 130, and a central bore 152, while the second end 144 comprises an end cap 146. The end cap 146 is secured onto the body by screws 150 (shown in Figs. 2a and 2b) and comprises an opening 160 (shown in Figs. 2a and 2b) for allowing wiring to pass through the end cap 146. Each narrow side of the body 140 comprises a series of longitudinal grooves 148 and an opening 154.

Figures 2a and 2b show a cross-sectional view through line A-A of Figure 1b. The control unit 100 comprises an electric motor 102 having a motor shaft 108, the motor shaft 108 comprising a threaded rod; a valve 110 comprising a valve member 112, the valve member 112 having a threaded recess 114 for receiving the threaded rod 108; and an inlet 120 and outlet 130 for fluid. The valve 110 has an open position (shown in Figure 2a), in which fluid can flow from the inlet 120 to the outlet 130, and a closed position (shown in Figure 2b), in which the flow of fluid from the inlet 120 to the outlet 130 is blocked. The valve member 112 is movable between the open and closed positions by a threading and unthreading interaction of the valve member 112 with the threaded rod 108 when the motor 102 is operated. The motor 102 is located within the body 140 towards the second end 144 and the valve 110 is located within the body 140 closer towards the first end 142.

The valve 110 comprises a valve member 112 in the form of a generally cylindrical piston, which fits snugly within a chamber 116. The chamber 116 is connected to the inlet 120 via a first channel 122 and to the outlet 130 via a second channel 132. The first interface 124 between the first channel 122 and the chamber 116 is offset from the second interface 134 between the second channel 132 and the chamber 116, such that the first interface 124 is located closer to the first end of the control unit 142 than the second interface 134. However, in other embodiments (not shown), the second interface 134 may be located closer to the first end 142 than the first interface 124. It will also be understood that in some embodiments, particularly where the valve member 112 comprises a lateral bore instead of a region of reduced thickness, the first interface 124 and the second interface 134 may be aligned with each other.

The first and second channels 122, 132 are conveniently formed in two sections within the body 140 by drilling a first bore 126, 136 from the first end 142 and a second bore 128, 138 from the side of the body 140. The external openings 154 of the second sections 128, 138 are sealed by plugs 156. The inlet 120 and outlet 130 each comprise a push fit connector, in the form of a substantially tubular insert 131, which extends into the first section 126, 136 of the flow channels 122, 132 from the inlet 120 and outlet 130. The push fit connectors 131 allow the control unit 100 to be securely connected to tubing which is inserted into the inlet 120 and outlet 130.

A narrow bore 152 extends from the valve chamber 116 to the first end of the body 142. This enables the release of any air trapped in the valve chamber 116 after insertion of the valve member 112, which would otherwise act as a damper and prevent the valve member from moving completely into the open position. The bore 152 also facilitates drainage of any grease or fluid which may leak into the chamber 116 around the valve member 112.

The piston 112 comprises a region of reduced thickness 118. When the piston 112 is in the open position, the region of reduced thickness 118 aligns with the first and second interfaces 124, 134 and provides a flow path between the first channel 122 and the second channel 132, such that fluid can flow freely from the inlet 120 to the outlet 130. When the piston 112 is in the closed position, the region of reduced thickness 118 is not open to the second interface 134, so fluid cannot flow into the second channel 132.

The piston 112 also comprises three O-rings 119a-119c, to prevent leakage of fluid into the chamber 116 around the piston 112. Two of the O-rings 119a, 119b are located on either side of the region of reduced thickness 118, creating a seal around this region and ensuring that no fluid is able to flow from the first interface 124 to the second interface 134 when the piston 112 is in the closed position. They also ensure that no leakage occurs when the piston 112 is in the open position. The third O-ring 119c is located such that two of the O-rings 119b, 119c are positioned on either side of the second interface 134 when the piston 112 is in the closed position.

The piston 112 further comprises a threaded recess 114, which engages with the threaded rod 108 of the motor shaft. In use, operation of the motor 102 causes the threaded rod 108 to rotate. Since the motor 102, and hence the threaded rod 108, are prevented from moving along the longitudinal axis of the body 140, the threaded rod 108 does not screw into or out of the threaded recess 114. Instead, rotation of the threaded rod 108 causes the piston 112 to thread or unthread itself from the rod 108 and thereby move between the open and closed positions, depending on the direction of rotation. The piston 112 is provided with a flat surface which abuts against a corresponding flat surface in the valve chamber 116 and prevents rotation of the piston 112. This ensures that the piston 112 traverses with only a linear motion, thereby preventing excessive wear on the O-rings 119a-119c due to rotation.

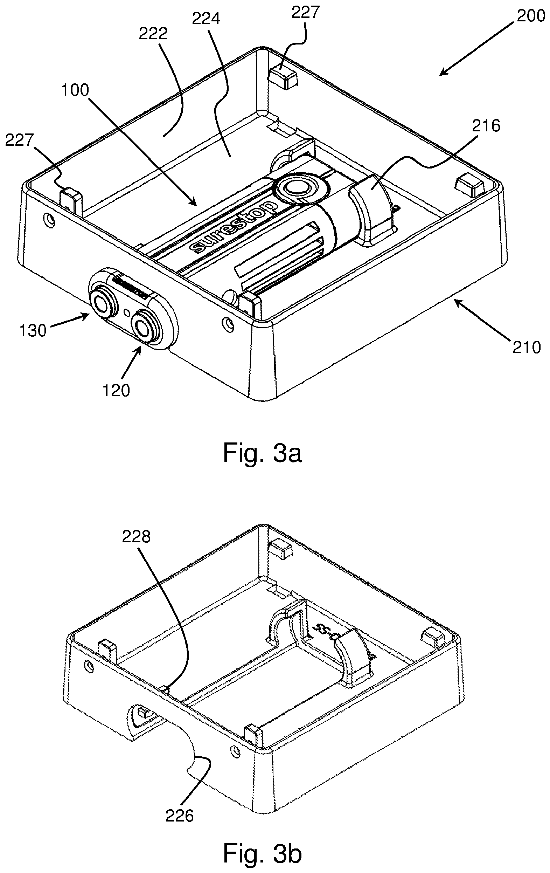

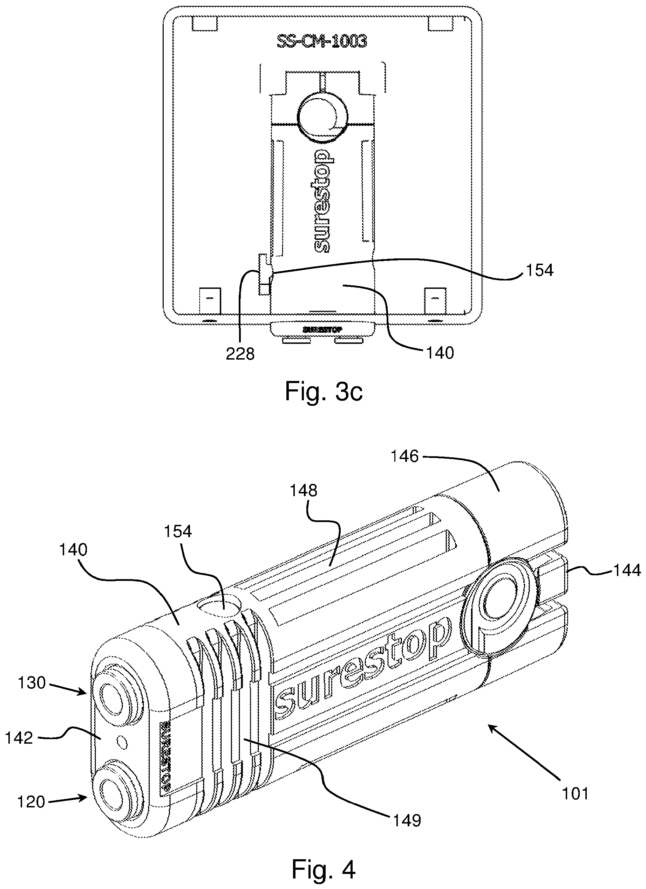

Figures 3a and 3c show a control module 200 in accordance with the invention. The control module 200 comprises a housing 210 and a control unit 100 in accordance with the invention. The housing 210 is generally square-shaped and comprises a compartment having four sidewalls 222 and a back plate 224. In other embodiments (not shown), the housing may be rectangular, or any suitable shape, instead of square. One sidewall 222 comprises a cut-out 226 (shown in Fig. 3b) corresponding to the cross-sectional shape of the control unit 100. The housing further comprises detents 227 for securing a control panel 230 to be fitted onto the open front face of the housing 210.

The control unit 100 is held within the housing 210 by a bracket 216, such that the first end 142 of the control unit 100 protrudes slightly through the cut-out 226, providing convenient access to the inlet and outlet ports 120, 130 of the control unit 100. The control unit 100 can be easily fitted into the control module 200 by inserting the control unit 100 through the cut-out 226 and push-fitting into the bracket 216. The housing 210 further comprises a biased locating clip 228, which engages with a recess 154 in the side of the body 140 and secures the control unit 100 within the control module 200. The control unit 100 can be released by manually pushing the locating clip 228 out of the recess 154.

Figure 4 shows an alternative embodiment 101 of the controller unit 100 illustrated in Figure 1a. Each wide side of the body 140 comprises a series of lateral grooves 149 located towards the first end 142. When fitted into a housing, such as the housing 210 shown in Figures 3a-c, the lateral grooves may assist with locating the control unit 101 correctly within the housing, for example by engaging with an edge of the cut-out 226.

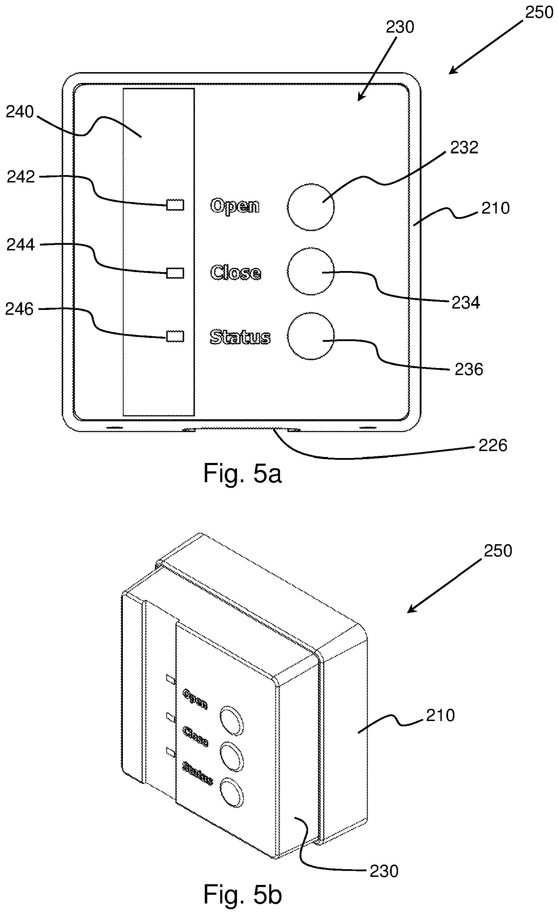

Figures 5a and 5b show another embodiment of a control module 250, further comprising a control panel 230 which is fitted onto the open front face of the housing 210, thereby closing the housing 210. The control panel 230 comprises two manual control switches 232, 234 in the form of an "open" button 232 and a "closed" button 234. When the "open" button 232 is pressed, a signal is transmitted to the control unit 100 in order to actuate the motor 102 to set the valve 110 to the open position. When the "closed" button 234 is pressed, a signal is transmitted to the control unit 100 in order to actuate the motor 102 to set the valve 110 to the closed position. The cover 230 also comprises a recessed section 240 containing LEDs 242, 244 which align with the buttons 232, 234. When the "open" button 232 is pressed, the LED 242 aligned with the "open" button 232 lights up. When the "closed" button 234 is pressed, the LED 244 aligned with the "closed" button 234 lights up.

The control panel 230 further comprises a battery check button 236, which controls a battery status test, and the recessed section 240 comprises an LED 246 aligned with the battery check button 236. When the battery status test is initiated, a processor (not shown) obtains the battery charge level from a battery sensor (not shown) within the control module. If the charge is above a minimum desired level, the LED 246 may display a certain pattern, for example, whereas if the charge is below the minimum desired level, the LED 246 may display a different pattern.

The control panel 230 also contains a number of internal components which are not shown in the figures, such as a battery compartment (which can be wired to the control unit 100 when fitted), and a wireless transceiver coupled to a transducer or relay. The transducer controls the motor 102 of the control unit 100 in response to signals received by the transceiver, by sending a voltage pulse to the motor 102. The battery compartment holds batteries for powering the motor 102 and the other electrical components.

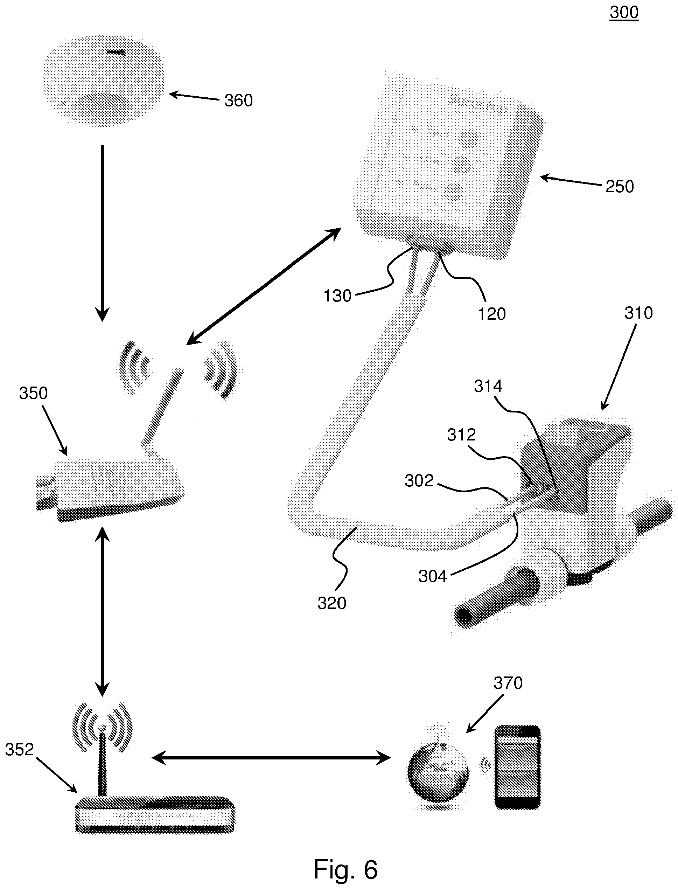

Figure 6 shows a schematic diagram of a remote shut-off valve system 300 in accordance with the invention. The system 300 comprises a diaphragm valve 310, having an inlet 312 and an outlet 314, and a control module 250 according to the invention. The diaphragm valve 310 is connected to the control module 250 via two fluid conduits 302, 304 in the form of tubes. The first fluid conduit 302 connects the inlet 312 of the diaphragm valve 310 to the inlet 120 of the control unit 100 in the control module 200, while the second fluid conduit 304 connects the outlet 314 of the diaphragm valve 310 to the outlet 130 of the control unit 100. The tubes 302, 304 are held within a protective sheath 320. If the order of the tubing is reversed (i.e. inlet 312 is connected to outlet 130 and outlet 314 is connected to inlet 120), the control unit will still function as normal to operate the diaphragm valve as intended.

The system 300 further comprises an loT hub 350 and a sensor in the form of a motion detector 360. The loT hub 350 is wired to a router 352, which enables the hub 350 to be connected to the network and onwards to the wider Internet 370. The hub 350 communicates with the control module 250 and with the motion detector 360. The hub 350 is configured to send command signals to the control module 250 corresponding to signals received from the motion detector 360 or from the network via the router 352. The hub 350 is also configured to receive signals from the control module 250 and transmit them to the network via the router 352. This enables the current open/closed status of the diaphragm valve or the status of the battery to be checked remotely by a user.

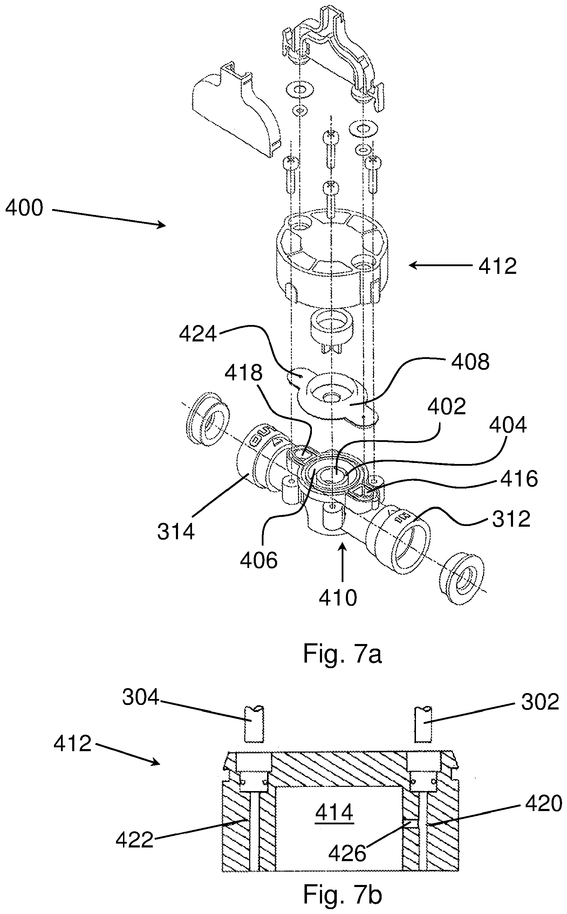

Figure 7a shows an example of a diaphragm valve 400 suitable for use with the system 300 of the invention. It will be understood that any suitable valve which is capable of being operated hydraulically as described below, such as the valve disclosed in EP2396579, may be used with the control unit of the present invention. The outlet 314 is in fluid communication with the hollow interior 402 of the valve seat 404, and the inlet 312 is in fluid communication with the chamber 406 surrounding the valve seat 404.

The flexible diaphragm 408 is clamped to the body 410, and is flexible so that it can alternately seal against the valve seat 404, closing off the flow of fluid from the chamber 306 to the hollow interior 402 and thus from the inlet 312 to the outlet 314, or be free of the valve seat 404, in which case fluid can flow from the chamber 406 to the hollow interior 402.

The diaphragm valve 400 also includes a cap member 412 providing a control chamber 414 therein, as shown in Figure 7b, which is located above the diaphragm 408 when the diaphragm valve is assembled. The pressure within the control chamber 414 determines whether or not the diaphragm valve 310 is closed or open, i.e. whether or not the diaphragm 408 engages the valve seat 404.

Formed in the body 410 are two openings 416, 418 which are connected by way of narrow channels (not shown) to the inlet 312 and outlet 314 respectively. The diaphragm 408 has two holes 424 therethrough, which in the assembled condition are aligned with the openings 416, 418. The holes 424 lie outside the area of the control chamber 414 in the assembled condition, so that fluid does not flow into and out of the control chamber 414 through the holes 424.

As shown in Figure 7b, the cap member 412 has two flow channels 420, 422, which in the assembled condition are aligned with the holes 424 and so with the respective openings 416, 418. The flow channel 420 provides part of the first fluid conduit 302 by which fluid can flow from the inlet 312 to the control unit 100, while the flow channel 422 provides part of the second fluid conduit 304 by which fluid can flow from the control unit 100 to the outlet 314. The flow channel 420 has a branch 426, which communicates fluid from the first fluid conduit 302 to the control chamber 414.

In use, the remote shut-off valve system 300 is designed normally to be open, corresponding to a conventional stop-cock which is also normally open. In such circumstances, the valve 110 in the control unit 100 will be open, and fluid will flow through the inlet flow channel 420, along the tube 302, past the valve member 112, along the tube 304, and through the flow channel 422 to the outlet 314. Because the inlet flow channel 420 is at a pressure close to that of the outlet 314, the control chamber 414 will also be at a pressure close to that of the outlet 314, in which case the diaphragm 408 will be away from its seat, allowing flow from the inlet 312 to the outlet 314 past the diaphragm 408.

When it is desired to stop the flow of water, the valve 110 in the control unit 100 can be closed by way of operating the motor 102 via the switch 104, which moves the valve member 112 to the closed position. Closure of the valve member 112 cuts off the inlet 120 of the valve 110 from the outlet 130, so that the pressure in the inlet fluid conduit (comprising the flow channel 420 and the tube 302), and hence also in the control chamber 414, rises substantially compared to that of the outlet 314. This causes the diaphragm 308 to close against the seat 404, shutting off the flow of fluid from the inlet 312 to the outlet 314.

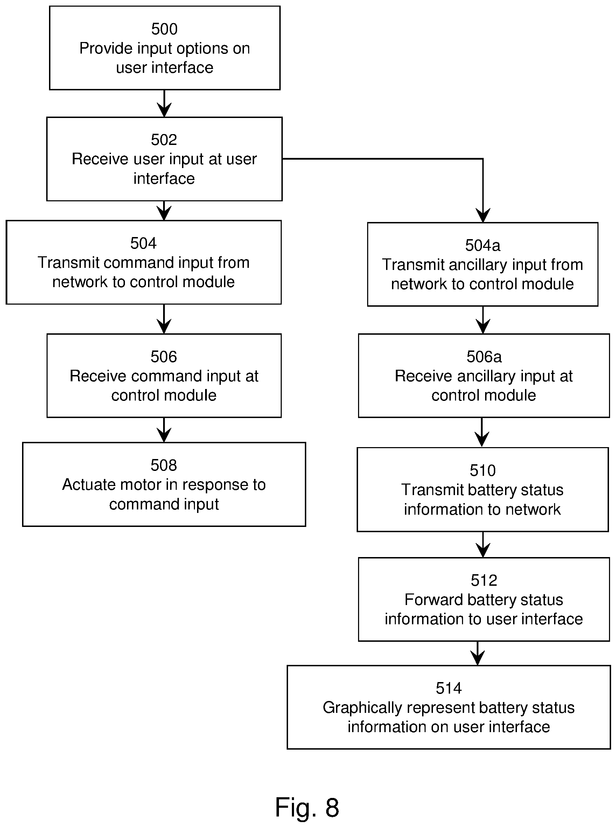

Figure 8 shows a flow diagram of a method for remotely shutting off the supply of a fluid, in accordance with an embodiment of the invention.

A number of command input options, such as "on" and "off", are provided 500 on a web- or app-based user interface. The user selects an option depending on whether they want to turn a target water supply on or off. In some embodiments, further ancillary input options may be provided, such as "battery check", which the user may select to check the charge level of the battery in the control unit 100. The user input (i.e. a command input and/or an ancillary input) is received 502 at the user interface, and transmitted over the Internet to a network which is in communication with the target control module 250. A signal corresponding to the user input is then transmitted 504 from the network to the control module 250 via a router.

The motor 102 in the control unit 100 is then actuated 508 in response to the signal received 506 at the control module 250. For example, if the user selects an "off" command option, an "off" command signal will be received 506 at the control module 250, and the motor 102 will be actuated 508 such that the valve member 112 is moved to the closed position, closing the valve 110. This in turn causes the diaphragm valve 310 to close, shutting off the supply of water through the pipe to which the diaphragm valve 310 is fitted. Alternatively, if the user selects an "on" command option, an "on" command signal will be received 506 at the control module 250, and the motor 102 will be actuated 508 such that the valve member 112 is moved to the open position. This in turn causes the diaphragm valve 310 to open, restoring the supply of water.

It will be understood that, if an "off" command signal is received 506 at the control module 250 when the valve member 112 is already set in the closed position, or if an "on" command signal is received 506 at the control module 200 when the valve member 112 is already set in the open position, the motor 102 will not necessarily need to actuate.

If the user selects the "battery check" ancillary option, a "battery check" ancillary signal is transmitted 504a to the control module 250 via the network. The "battery check" ancillary signal is received 506a at the control module 250 and, in return, battery status information from the battery sensor is transmitted 510 from the control module 250 to the network. This information is then forwarded 512 to the user interface over the Internet, and graphically represented 514 on the user interface to indicate the charge level of the battery to the user.

## Claims

1. A remote shut-off valve system (300) comprising:
a control module (250) comprising:
a housing (210);
a control unit (100) contained within the housing (210); and
a control panel (230) attached to the housing;
the control unit (100) comprising:
an electric motor (102) having a motor shaft, the motor shaft comprising a threaded rod (108);
a valve (110) comprising a valve member (112), the valve member (112) having a threaded recess (114) for receiving the threaded rod (108); and
an inlet (120) and outlet (130) for fluid,
the valve (110) having an open position in which fluid can flow from the inlet (120) to the outlet (130) and a closed position in which the flow of fluid from the inlet (120) to the outlet (130) is blocked,
wherein the valve member (112) is movable between the open and closed positions by a threading and unthreading interaction of the valve member (112) with the threaded rod (108) when the motor (102) is operated,
wherein the valve (310, 400) is a hydraulic valve and the fluid is water,
wherein the control unit (100) further comprises a body (140), the motor (102) and the valve (110) being housed within the body, and
wherein:
i) the control panel (230) comprises a manual control switch (232, 234) configured to control the motor (102) in the control unit (100); and/or
ii) the control module (250) comprises:
a receiver, configured to receive signals from a network connected to the Internet;
a transmitter, configured to send signals to the network; and
a transducer, configured to control the motor (102) in response to a signal received by the receiver, such that the valve member (112) is set to the closed position when an "off" signal is received and to the open position when an "on" signal is received; and
a diaphragm valve (310, 400) comprising:
an inlet (312),
an outlet (314),
a diaphragm valve member (408), and
a diaphragm valve seat (404);
a first fluid conduit (302) connecting the inlet (312) of the diaphragm valve (310, 400) to the inlet (120) of the control unit (100); and
a second fluid conduit (304) connecting the outlet (130) of the control unit (100) to the outlet (314) of the diaphragm valve (310, 400),
the diaphragm valve member (408) having a closed position in which it engages the diaphragm valve seat (404) and blocks the flow of fluid from the inlet (312) of the diaphragm valve (310, 400) to the outlet (314) of the diaphragm valve (310, 400) and an open position in which the diaphragm valve member (408) does not engage the valve seat (404) and fluid can flow from the inlet (312) of the diaphragm valve (310, 400) to the outlet (314) of the diaphragm valve (310, 400), wherein when the valve (110) of the control unit (100) is in the closed position a pressure at the inlet (312) becomes higher than a pressure at the outlet (314) causing the diaphragm valve member (408) to move to a closed position and engage the diaphragm valve seat (404)

2. The remote shut-off valve system (300) of claim 1, wherein the threaded rod (108) is integrally formed with and constitutes part of the motor shaft, or wherein the threaded rod (108) is coupled to the motor shaft.

3. The remote shut-off valve system (300) of claim 1 or claim 2, wherein the valve member (112) further comprises one or more O-rings (119a, 119b, 119c), and/or wherein the valve member (112) is an elongate piston, the threaded recess (114) being located in a first end of the piston.

4. The remote shut-off valve system (300) of any one of the preceding claims, wherein the valve member (112) further comprises a region of reduced thickness (118), the region of reduced thickness (118) providing a flow path between the inlet (120) and the outlet (130) when the valve member (112) is in the open position, and optionally wherein the valve member (112) comprises an O-ring (119a, 119b) on each side of the region of reduced thickness (118).

5. The remote shut-off valve system (300) of any one of the preceding claims, further comprising a power supply for powering the motor, optionally wherein the power supply is contained within the control panel (230).

6. The remote shut-off valve system (300) of claim 5, wherein the power supply is a battery, and optionally wherein the power supply comprises a battery sensor configured to obtain battery status information.

7. The remote shut-off valve system (300) of any one of the preceding claims, wherein the control panel (230) comprises two manual control switches (232, 234): a first manual control switch (232) configured to set the valve member (112) to the open position, and a second manual control switch (234) configured to set the valve member (112) to the closed position.

8. The remote shut-off valve system (300) of claim 6 or claim 7, comprising a battery sensor, wherein the control panel (230) further comprises a battery test switch (236) configured to control a battery status test, and optionally wherein the control panel (230) further comprises display means (246) for indicating a result of the battery status test.

9. The remote shut-off valve system (300) of any one of the preceding claims, wherein the receiver, transmitter and transducer are contained within the control panel (230).

10. The remote shut-off valve system (300) of any one of the preceding claims, wherein the control module (250) is configured to communicate with the network via a wireless communications link, and optionally wherein either:
i) the network is a local area network, and optionally the wireless communications link is either Wi-Fi or Bluetooth, or
ii) the network is a cellular data network, and optionally the wireless communications link is a 3G, 4G or 5G telecommunications link.

11. The remote shut-off valve system (300) of any one of the preceding claims, wherein the network comprises an IoT hub and the control module (250) is configured to communicate with the loT hub, and/or wherein the control module (250) comprises a battery sensor and the transmitter is configured to send the battery status information to the network.

12. The remote shut-off valve system (300) of any one of the preceding claims, wherein the system (300) further comprises an IoT hub (350) connected to the network, the control module (250) being configured to communicate with the loT hub (350), and optionally wherein the system (300) further comprises one or more sensors (360) in communication with the loT hub (350).

13. The remote shut-off valve system (300) of any one of the preceding claims, wherein the motor further comprises a gearbox.

14. A method of remotely controlling a supply of fluid, comprising:
receiving a signal at a control module (250) of a remote shut-off valve system (300) according to any one of claims 1 to 13; and
actuating the motor (102) in response to the signal, such that the valve member (112) is set to the closed position when an "off" signal is received and the open position when an "on" signal is received (508),
optionally further comprising:
providing one or more input options on a user interface (500);
receiving the user input corresponding to one or more responses to the input options (502), wherein the user input is received at the user interface; and
transmitting a signal from a network to the control module (504), the signal corresponding to the user input,
optionally wherein the user interface is web-based.

15. The method of claim 14, wherein the control module (250) comprises a battery sensor for measuring battery status information, the method further comprising:
transmitting a signal from the control module (250) to the network (510), the signal corresponding to the battery status information;
transmitting the battery status information to the user interface (512); and
graphically representing the battery status information on the user interface (514).

## Patentansprüche

1. Fernabsperrventilsystem (300), das Folgendes umfasst:
ein Steuermodul (250), das Folgendes umfasst:
ein Gehäuse (210);
eine Steuereinheit (100), die innerhalb des Gehäuses (210) enthalten ist; und
eine Steuertafel (230), die an dem Gehäuse angebracht ist;
wobei die Steuereinheit (100) Folgendes umfasst:
einen Elektromotor (102), der eine Motorwelle aufweist, wobei die Motorwelle eine Gewindestange (108) umfasst,
ein Ventil (110), das ein Ventilelement (112) umfasst, wobei das Ventilelement (112) eine Gewindeaussparung (114) zum Aufnehmen der Gewindestange (108) aufweist, und
einen Einlass (120) und einen Auslass (130) für Fluid,
wobei das Ventil (110) eine offene Stellung, in der Fluid von dem Einlass (120) zu dem Auslass (130) strömen kann, und eine geschlossene Stellung, in welcher der Strom von Fluid von dem Einlass (120) zu dem Auslass (130) blockiert ist, aufweist,
wobei das Ventilelement (112) durch ein anschraubendes und abschraubendes Zusammenwirken des Ventilelements (112) mit der Gewindestange (108), wenn der Motor (102) betätigt wird, zwischen der offenen und der geschlossenen Stellung beweglich ist,
wobei das Ventil (310, 400) ein hydraulisches Ventil ist und das Fluid Wasser ist,
wobei die Steuereinheit (100) ferner einen Körper (140) umfasst, wobei der Motor (102) und das Ventil (110) innerhalb des Körpers untergebracht sind, und
wobei:
i) die Steuertafel (230) einen manuellen Steuerschalter (232, 234) umfasst, der dafür konfiguriert ist, den Motor (102) in der Steuereinheit (100) zu steuern, und/oder
ii) das Steuermodul (250) Folgendes umfasst:
einen Empfänger, der dafür konfiguriert ist, Signale von einem Netz zu empfangen, das mit dem Internet verbunden ist;
einen Sender, der dafür konfiguriert ist, Signale an das Netz zu senden; und
einen Wandler, der dafür konfiguriert ist, den Motor (102) als Reaktion auf ein durch den Empfänger empfangenes Signal derart zu steuern, dass das Ventilelement (112) auf die geschlossene Stellung gestellt wird, wenn ein "Aus"-Signal empfangen wird, und auf die offene Stellung, wenn ein "Ein"-Signal empfangen wird, und
ein Membranventil (310, 400), das Folgendes umfasst:
einen Einlass (312),
einen Auslass (314),
ein Membranventilelement (408), und
einen Membranventilsitz (404);
eine erste Fluidleitung (302), die den Einlass (312) des Membranventils (310, 400) mit dem Einlass (120) der Steuereinheit (100) verbindet; und
eine zweite Fluidleitung (304), die den Auslass (130) der Steuereinheit (100) mit dem Auslass (314) des Membranventils (310, 400) verbindet,
wobei das Membranventilelement (408) eine geschlossene Stellung, in der es den Membranventilsitz (404) in Eingriff nimmt und den Strom von Fluid von dem Einlass (312) des Membranventils (310, 400) zu dem Auslass (314) des Membranventils (310, 400) blockiert, und eine offene Stellung, in der das Membranventilelement (408) den Ventilsitz (404) nicht in Eingriff nimmt und Fluid von dem Einlass (312) des Membranventils (310, 400) zu dem Auslass (314) des Membranventils (310, 400) strömen kann, aufweist, wobei, wenn sich das Ventil (110) der Steuereinheit (100) in der geschlossenen Stellung befindet, ein Druck an dem Einlass (312) höher wird als ein Druck an dem Auslass (314), was bewirkt, dass sich das Membranventilelement (408) zu einer geschlossenen Stellung bewegt und den Membranventilsitz (404) in Eingriff nimmt.

2. Fernabsperrventilsystem (300) nach Anspruch 1, wobei die Gewindestange (108) einstückig mit der Motorwelle geformt ist und einen Teil derselben darstellt, oder wobei die Gewindestange (108) an die Motorwelle gekoppelt ist.

3. Fernabsperrventilsystem (300) nach Anspruch 1 oder Anspruch 2, wobei das Ventilelement (112) ferner einen oder mehrere O-Ringe (119a, 119b, 119c) umfasst, und/oder wobei das Ventilelement (112) ein länglicher Kolben ist, wobei sich die Gewindeaussparung (114) in einem ersten Ende des Kolbens befindet.

4. Fernabsperrventilsystem (300) nach einem der vorhergehenden Ansprüche, wobei das Ventilelement (112) ferner einen Bereich verringerter Dicke (118) umfasst, wobei der Bereich verringerter Dicke (118) eine Strömungsbahn zwischen dem Einlass (120) und dem Auslass (130) bereitstellt, wenn sich das Ventilelement (112) in der offenen Stellung befindet, und wahlweise, wobei das Ventilelement (112) einen O-Ring (119a, 119b) auf jeder Seite des Bereichs verringerter Dicke (118) umfasst.

5. Fernabsperrventilsystem (300) nach einem der vorhergehenden Ansprüche, das ferner eine Energieversorgung zum Speisen des Motors umfasst, wahlweise wobei die Energieversorgung innerhalb der Steuertafel (230) enthalten ist.

6. Fernabsperrventilsystem (300) nach Anspruch 5, wobei die Energieversorgung eine Batterie ist und wahlweise, wobei die Energieversorgung einen Batteriesensor umfasst, der dafür konfiguriert ist, Batteriezustandsinformationen zu erlangen.

7. Fernabsperrventilsystem (300) nach einem der vorhergehenden Ansprüche, wobei die Steuertafel (230) zwei manuelle Steuerschalter (232, 234) umfasst: einen ersten manuellen Steuerschalter (232), der dafür konfiguriert ist, das Ventilelement (112) zu der offenen Stellung zu stellen, und einen zweiten manuellen Steuerschalter (234), der dafür konfiguriert ist, das Ventilelement (112) zu der geschlossenen Stellung zu stellen.

8. Fernabsperrventilsystem (300) nach Anspruch 6 oder Anspruch 7, das einen Batteriesensor umfasst, wobei die Steuertafel (230) ferner einen Batterieprüfschalter (236) umfasst, der dafür konfiguriert ist, eine Batteriezustandsprüfung zu steuern, und wahlweise, wobei die Steuertafel (230) ferner Anzeigemittel (246) zum Angeben eines Ergebnisses der Batteriezustandsprüfung umfasst.

9. Fernabsperrventilsystem (300) nach einem der vorhergehenden Ansprüche, wobei der Empfänger, der Sender und der Wandler innerhalb der Steuertafel (230) enthalten sind.

10. Fernabsperrventilsystem (300) nach einem der vorhergehenden Ansprüche, wobei das Steuermodul (250) dafür konfiguriert ist, über eine drahtlose Kommunikationsverbindung mit dem Netz zu kommunizieren, und wahlweise wobei entweder:
i) das Netz ein lokales Netz ist und wahlweise die drahtlose Kommunikationsverbindung entweder Wi-Fi oder Bluetooth ist, oder
ii) das Netz ein zellulares Datennetz ist und wahlweise die drahtlose Kommunikationsverbindung eine 3G-, 4G- oder 5G-Telekommunikationsverbindung ist.

11. Fernabsperrventilsystem (300) nach einem der vorhergehenden Ansprüche, wobei das Netz einen IoT-Hub umfasst und das Steuermodul (250) dafür konfiguriert ist, mit dem IoT-Hub zu kommunizieren, und/oder wobei das Steuermodul (250) einen Batteriesensor umfasst und der Sender dafür konfiguriert ist, die Batteriezustandsinformationen an das Netz zu senden.

12. Fernabsperrventilsystem (300) nach einem der vorhergehenden Ansprüche, wobei das System (300) ferner einen IoT-Hub (350) umfasst, der mit dem Netz verbunden ist, wobei das Steuermodul (250) dafür konfiguriert ist, mit dem IoT-Hub (350) zu kommunizieren, und wahlweise, wobei das System (300) ferner einen oder mehrere Sensoren (360) in Kommunikation mit dem IoT-Hub (350) umfasst.

13. Fernabsperrventilsystem (300) nach einem der vorhergehenden Ansprüche, wobei der Motor ferner ein Getriebe umfasst.

14. Verfahren zum Fernsteuern einer Fluidzufuhr, das Folgendes umfasst:
Empfangen eines Signals an einem Steuermodul (250) eines Fernabsperrventilsystems (300) nach einem der Ansprüche 1 bis 13; und
Betätigen des Motors (102) als Reaktion auf das Signal derart, dass das Ventilelement (112) auf die geschlossene Stellung gestellt wird, wenn ein "Aus"-Signal empfangen wird, und auf die offene Stellung, wenn ein "Ein"-Signal empfangen wird (508),
wobei es wahlweise ferner Folgendes umfasst:
Bereitstellen einer oder mehrerer Eingabeoptionen auf einer Benutzerschnittstelle (500);
Empfangen der Benutzereingabe, die einer oder mehreren Antworten auf die Eingabeoptionen entspricht (502), wobei die Benutzereingabe an der Benutzerschnittstelle empfangen wird, und
Übermitteln eines Signals von einem Netz an das Steuermodul (504), wobei das Signal der Benutzereingabe entspricht,
wahlweise, wobei die Benutzerschnittstelle webbasiert ist.

15. Verfahren nach Anspruch 14, wobei das Steuermodul (250) einen Batteriesensor zum Messen von Batteriezustandsinformationen umfasst, wobei das Verfahren ferner Folgendes umfasst:
Übermitteln eines Signals von dem Steuermodul (250) an das Netz (510), wobei das Signal den Batteriezustandsinformationen entspricht,
Übermitteln der Batteriezustandsinformationen an die Benutzerschnittstelle (512); und
graphisches Darstellen der Batteriezustandsinformationen auf der Benutzerschnittstelle (514).

## Revendications

1. Système de soupape d'arrêt à distance (300) comprenant :
un module de commande (250) comprenant :
un boîtier (210) ;
une unité de commande (100) contenue à l'intérieur du boîtier (210) ; et
un panneau de commande (230) fixé au boîtier ;
l'unité de commande (100) comprenant :
un moteur électrique (102) présentant un arbre de moteur, l'arbre de moteur comprenant une tige filetée (108) ;
une soupape (110) comprenant un élément de soupape (112), l'élément de soupape (112) présentant un évidement fileté (114) pour recevoir la tige filetée (108) ; et
une entrée (120) et une sortie (130) pour un fluide,
la soupape (110) présentant une position ouverte dans laquelle un fluide peut s'écouler depuis l'entrée (120) vers la sortie (130) et une position fermée dans laquelle l'écoulement de fluide depuis l'entrée (120) vers la sortie (130) est bloqué,
dans lequel l'élément de soupape (112) est mobile entre les positions ouverte et fermée par une interaction de vissage et de dévissage de l'élément de soupape (112) avec la tige filetée (108) lorsque le moteur (102) est actionné,
dans lequel la soupape (310, 400) est une soupape hydraulique et le fluide est de l'eau,
dans lequel l'unité de commande (100) comprend en outre un corps (140), le moteur (102) et la soupape (110) étant logés à l'intérieur du corps, et
dans lequel :
i) le panneau de commande (230) comprend un commutateur de commande manuelle (232, 234) configuré pour commander le moteur (102) dans l'unité de commande (100) ; et/ou
ii) le module de commande (250) comprend :
un récepteur, configuré pour recevoir des signaux en provenance d'un réseau connecté à l'internet ;
un émetteur, configuré pour envoyer des signaux au réseau ; et
un transducteur, configuré pour commander le moteur (102) en réponse à un signal reçu par le récepteur, de telle sorte que l'élément de soupape (112) est réglé sur la position fermée lorsqu'un signal « arrêt » est reçu et sur la position ouverte lorsqu'un signal « marche » est reçu ; et
une soupape à diaphragme (310, 400) comprenant :
une entrée (312),
une sortie (314),
un élément de soupape à diaphragme (408), et
un siège de soupape à diaphragme (404) ;
un premier conduit de fluide (302) connectant l'entrée (312) de la soupape à diaphragme (310, 400) à l'entrée (120) de l'unité de commande (100) ; et
un second conduit de fluide (304) connectant la sortie (130) de l'unité de commande (100) à la sortie (314) de la soupape à diaphragme (310, 400),
l'élément de soupape à diaphragme (408) présentant une position fermée dans laquelle il se met en prise avec le siège de soupape à diaphragme (404) et bloque l'écoulement de fluide depuis l'entrée (312) de la soupape à diaphragme (310, 400) vers la sortie (314) de la soupape à diaphragme (310, 400) et une position ouverte dans laquelle l'élément de soupape à diaphragme (408) ne se met pas en prise avec le siège de soupape (404) et un fluide peut s'écouler depuis l'entrée (312) de la soupape à diaphragme (310, 400) vers la sortie (314) de la soupape à diaphragme (310, 400), dans lequel lorsque la soupape (110) de l'unité de commande (100) est dans la position fermée une pression au niveau de l'entrée (312) devient supérieure à une pression au niveau de la sortie (314) amenant l'élément de soupape à diaphragme (408) à se déplacer vers une position fermée et se mettre en prise avec le siège de soupape à diaphragme (404).

2. Système de soupape d'arrêt à distance (300) selon la revendication 1, dans lequel la tige filetée (108) est formée d'un seul tenant avec l'arbre de moteur et constitue une partie de celui-ci, ou dans lequel la tige filetée (108) est couplée à l'arbre de moteur.

3. Système de soupape d'arrêt à distance (300) selon la revendication 1 ou la revendication 2, dans lequel l'élément de soupape (112) comprend en outre un ou plusieurs joints toriques (119a, 119b, 119c) et/ou dans lequel l'élément de soupape (112) est un piston allongé, l'évidement fileté (114) étant situé dans une première extrémité du piston.

4. Système de soupape d'arrêt à distance (300) selon l'une quelconque des revendications précédentes, dans lequel l'élément de soupape (112) comprend en outre une zone d'épaisseur réduite (118), la zone d'épaisseur réduite (118) fournissant un trajet d'écoulement entre l'entrée (120) et la sortie (130) lorsque l'élément de soupape (112) est dans la position ouverte et facultativement dans lequel l'élément de soupape (112) comprend un joint torique (119a, 119b) sur chaque côté de la zone d'épaisseur réduite (118).

5. Système de soupape d'arrêt à distance (300) selon l'une quelconque des revendications précédentes, comprenant en outre une alimentation électrique pour alimenter électriquement le moteur, facultativement dans lequel l'alimentation électrique est contenue à l'intérieur du panneau de commande (230).

6. Système de soupape d'arrêt à distance (300) selon la revendication 5, dans lequel l'alimentation électrique est une batterie et facultativement dans lequel l'alimentation électrique comprend un capteur de batterie configuré pour obtenir des informations d'état de batterie.

7. Système de soupape d'arrêt à distance (300) selon l'une quelconque des revendications précédentes, dans lequel le panneau de commande (230) comprend deux commutateurs de commande manuelle (232, 234) : un premier commutateur de commande manuelle (232) configuré pour régler l'élément de soupape (112) sur la position ouverte et un second commutateur de commande manuelle (234) configuré pour régler l'élément de soupape (112) sur la position fermée.

8. Système de soupape d'arrêt à distance (300) selon la revendication 6 ou la revendication 7, comprenant un capteur de batterie, dans lequel le panneau de commande (230) comprend en outre un commutateur de test de batterie (236) configuré pour commander un test d'état de batterie et facultativement dans lequel le panneau de commande (230) comprend en outre un moyen d'affichage (246) pour indiquer un résultat du test d'état de batterie.

9. Système de soupape d'arrêt à distance (300) selon l'une quelconque des revendications précédentes, dans lequel le récepteur, l'émetteur et le transducteur sont contenus à l'intérieur du panneau de commande (230).

10. Système de soupape d'arrêt à distance (300) selon l'une quelconque des revendications précédentes, dans lequel le module de commande (250) est configuré pour communiquer avec le réseau *via* une liaison de communication sans fil et facultativement dans lequel soit :
i) le réseau est un réseau local et facultativement la liaison de communication sans fil est soit le Wi-Fi soit le Bluetooth, soit
ii) le réseau est un réseau de données cellulaire et facultativement la liaison de communication sans fil est une liaison de télécommunication 3G, 4G ou 5G.

11. Système de soupape d'arrêt à distance (300) selon l'une quelconque des revendications précédentes, dans lequel le réseau comprend un concentrateur IdO et le module de commande (250) est configuré pour communiquer avec le concentrateur IdO et/ou dans lequel le module de commande (250) comprend un capteur de batterie et l'émetteur est configuré pour envoyer les informations d'état de batterie au réseau.

12. Système de soupape d'arrêt à distance (300) selon l'une quelconque des revendications précédentes, dans lequel le système (300) comprend en outre un concentrateur IdO (350) connecté au réseau, le module de commande (250) étant configuré pour communiquer avec le concentrateur IdO (350) et facultativement dans lequel le système (300) comprend en outre un ou plusieurs capteurs (360) en communication avec le concentrateur IdO (350).

13. Système de soupape d'arrêt à distance (300) selon l'une quelconque des revendications précédentes, dans lequel le moteur comprend en outre une boîte de vitesses.

14. Procédé de commande à distance d'une alimentation en fluide, comprenant :
la réception d'un signal au niveau d'un module de commande (250) d'un système de soupape d'arrêt à distance (300) selon l'une quelconque des revendications 1 à 13 ; et
l'activation du moteur (102) en réponse au signal, de telle sorte que l'élément de soupape (112) est réglé sur la position fermée lorsqu'un signal « arrêt » est reçu et la position ouverte lorsqu'un signal « marche » est reçu (508),
facultativement comprenant en outre :
la fourniture d'une ou plusieurs options de saisie sur une interface utilisateur (500) ;
la réception de la saisie utilisateur correspondant à une ou plusieurs réponses aux options de saisie (502), dans lequel la saisie utilisateur est reçue au niveau de l'interface utilisateur ; et
la transmission d'un signal d'un réseau au module de commande (504), le signal correspondant à la saisie utilisateur,
facultativement dans lequel l'interface utilisateur est basée sur le web.

15. Procédé selon la revendication 14, dans lequel le module de commande (250) comprend un capteur de batterie pour mesurer des informations d'état de batterie, le procédé comprenant en outre :
la transmission d'un signal du module de commande (250) au réseau (510), le signal correspondant aux informations d'état de batterie ;
la transmission des informations d'état de batterie à l'interface utilisateur (512) ; et
la représentation graphique des informations d'état de batterie sur l'interface utilisateur (514).
